# EUROPÄISCHE PATENTANMELDUNG

(11) **EP 0 802 076 A2**
(43) Veröffentlichungstag der Anmeldung: **22.10.1997**
(21) Anmeldenummer: 97102188.6
(22) Anmeldetag: 12.02.1997
(51) Int. Cl.: B60H 1/00

(54) **Verfahren zum Betrieb einer Heizungs- und/oder Klimaanlage**

(30) Priorität: 18.04.1996 DE 19615239
(71) Anmelder: DAIMLER-BENZ AKTIENGESELLSCHAFT, 70567 Stuttgart (DE)
(72) Erfinder: Straub, Wolfgang, 73326 Deggingen (DE)

(57) **Zusammenfassung**

Die Erfindung bezieht sich auf ein Verfahren zum Betrieb einer Heizungs- oder Klimaanlage, insbesondere für ein Kraftfahrzeug, bei dem ein Temperierfluid mittels eines in seiner Förderleistung regulierbaren Fördergebläses angesaugt und nach Temperierung über wenigstens einen Ausströmkanal ausgeblasen wird, dessen Ausströmquerschnitt mittels eines zugehörigen ansteuerbaren Stellglieds regulierbar ist. Erfindungsgemäß wird jedes Stellglied zur Ausströmquerschnittsregulierung selbsttätig in eine von der Ausströmtemperatur(T_{L}) des Temperierfluids abhängige Stellung gesteuert, und die Fördergebläseleistung wird gemäß einer Kennlinie (U_{G}) in Abhängigkeit von dieser Ausströmtemperatur eingestellt. Diese Kennlinie (U_{G}) wird abhängig von den Stellungen der ausströmquerschnittsregulierenden Stellglieder und des dadurch bestimmten Gesamtausströmquerschnitts (A_{L}) der Anlage derart ermittelt, daß sich unabhängig von der Ausströmtemperatur des Temperierfluids und damit unabhängig von den unterschiedlichen Stellungen der ausströmquerschnittsregulierenden Stellglieder eine im wesentlichen konstante Temperierfluid-Ausströmgeschwindigkeit ergibt.

## Beschreibung

Die Erfindung bezieht sich auf ein Verfahren zum Betrieb einer Heizungs- und/oder Klimaanlage nach dem Oberbegriff des Anspruchs 1. Derartige Verfahren werden beispielsweise zum Betrieb von in Kraftfahrzeugen eingebauten Heizungs- und/oder Klimaanlagen verwendet, wobei als Temperierfluid Luft und als Stellglieder zur Ausströmquerschnittsregulierung des oder der Luftausströmkanäle Klappen dienen, durch deren Verstellung der in den Fahrzeuginnenraum ausgeblasene Luftmassenstrom und damit die Heiz- bzw. Klimatisierungsleistung für den Fahrzeuginnenraum in gewünschter Weise eingestellt werden können.

Aus der Offenlegungsschrift DE 43 41 208 A1 ist ein Verfahren dieser Art zum Klimatisieren eines Fahrzeuginnenraumes bekannt, bei dem die zur Innenraumtemperaturregelung herangezogene Isttemperatur im Austrittsbereich des Luftstroms aus dem Fahrzeuginnenraum gemessen und zusätzlich die Eintrittstemperatur des Luftstroms in den Fahrzeuginnenraum erfaßt wird und der Luftmassenstrom dann, wenn die Innenraumtemperatur-Regeldifferenz einen vorgegebenen Wert überschreitet, derart eingeregelt wird, daß das mathematische Produkt aus einer Kennzahl für den Luftmassenstrom und dem Differenzbetrag von Eintrittstemperatur und Isttemperatur maximal wird.

In der Offenlegungsschrift DE 41 13 374 A1 ist eine Regelungseinrichtung für eine Klimaanlage mit einem Lüfter zum Einblasen von Luft mit geregelter Temperatur in einen Raum sowie mit einer Fühlereinrichtung zum Messen der Hauttemperatur der in dem Raum befindlichen Personen beschrieben. Die Regelungseinrichtung ist mit Regelungsmitteln versehen, welche die Stärke des eingeblasenen Luftstroms in Abhängigkeit von der mittels der Fühlereinrichtung gemessenen Hauttemperatur sowie einer Soll-Hauttemperatur bestimmen, um eine optimale Soll-Temperaturempfindung für die Personen zu erreichen. Die elektronischen Regelungsmittel sind zum Aktivieren des Lüfters ausgebildet, der den Luftstrom mit der auf diese Weise ermittelten Stärke einbläst.

Bei einer in der Offenlegungsschrift DE 41 00 817 A1 offenbarten Luftmengen-Regelanordnung für Kraftfahrzeuge kann die dem Fahrzeuginnenraum zuzuführende Luftmenge unter Berücksichtigung von Störeinflüssen, wie Fahrgeschwindigkeit, Fenster- und Schiebedachbetätigungen und dergleichen, in Abhängigkeit eines vorgegebenen Sollwertes reguliert werden. Dazu ist eine Vorrichtung zum Messen des Differenzdrucks zwischen dem in einem Luftführungskanal hinter einem Fördergebläse herrschenden Eingangsdruck und dem im Fahrzeuginnenraum herrschenden Druck vorgesehen, und die am Gebläsemotor angelegte Spannung ist vom in einer zugehörigen Regeleinheit durchgeführten Vergleich des gemessenen, ein Maß für die geförderte Luftmenge darstellenden Differenzdrucks mit einer einstellbar vorgegebenen Soll-Luftmenge abhängig. Es ist in dieser Veröffentlichung auch eine Regelanordnung erwähnt, bei der am Tachometer ein der Fahrgeschwindigkeit proportionales Signal abgegriffen wird, mit dem die Stellung einer Eingangsklappe im Luftführungskanal geregelt wird, um die dem Fahrzeuginnenraum zugeführte Luftmenge fahrgeschwindigkeitsabhängig einzustellen.

Allgemein läßt sich sagen, daß vollautomatische Klimaanlagen für Kraftfahrzeuge bekannt sind, bei denen die Gebläseleistung automatisch in Abhängigkeit von der Regelabweichung der Innenraumtemperatur, der Heizwasservorlauftemperatur oder Kühlwassertemperatur, dem Heizmodus oder Kühlmodus, dem Fahrgeschwindigkeitssignal, dem Filter- oder Umluftbetrieb, der Sonneneinstrahlung, einem fest programmierten Gebläsedrehzahl-Grundlastpegel und/oder von einzelnen Klappenstellungen eingeregelt wird, z.B. Anhebung der Gebläsedrehzahl um einen festen Wert bei Öffnen der Fußraumbelüftungsklappen, Absenkung der Drehzahl bei geöffneten Abschöpfklappen usw..

Bekanntermaßen ist die Luftausblasgeschwindigkeit, mit der die Luft aus den entsprechenden Düsen einer Heizungs- und/oder Klimaanlage eines Kraftfahrzeuges in dessen Innenraum austritt, hauptsächlich abhängig von der Gebläsedrehzahl bzw. der Gebläseleistung, der konstant bleibenden Ansaugquerschnittfläche des Gebläsetraktes und vom sich verändernden Gesamtausströmquerschnitt der gesamten Heizungs- oder Klimaanlage. Wenn die Innenraumtemperatur den eingestellten Sollwert erreicht hat und alle anderen Parameter, die das Gebläse beeinflussen, annähernd konstant sind, läuft das Gebläse mit einer bestimmten Leistung auf einem Grundlastpegel. Durch die vollautomatische Anpassung der Klappenstellungen in Abhängigkeit von der Temperatur der ausgeblasenen Luft ändert sich in der Regel konstruktionsbedingt der Gesamtausströmquerschnitt der Heizungs- oder Klimaanlage und damit die Luftgeschwindigkeit an den Ausströmdüsen. Diese Änderung der Luftgeschwindigkeit wird vom Fahrgast als störend empfunden, da er vom Luftstrom meist direkt im Kopf-, Nacken- oder Brustbereich getroffen wird. Eine derartige Luftgeschwindigkeitsänderung aufgrund einer höher eingeregelten Belüftungstemperatur und damit einer Klappenstellungsänderung kann beispielsweise durch das Einfahren in einen Tunnel oder in ein Gewittergebiet verursacht sein. Wird die Gebläseleistung nicht an die Klappenstellungen angepaßt, so kann es zu Zugerscheinungen bei den Fahrzeuginsassen kommen.

Um dem abzuhelfen, wurde bereits eine Klimaanlage für Kraftfahrzeuge vorgeschlagen, bei der die Stellungen der vollautomatisch verstellbaren Klappen, wie Abschöpfklappen, Fußraumklappen, Entfrosterklappen und Temperierklappen, einzeln erfaßt werden und in einen Berechnungsalgorithmus für die Gebläsespannung eingehen. Die Anpassung dieser Vorgehensweise an die realen Fahrzeuggegebenheiten ist allerdings vergleichsweise aufwendig, da es schwierig ist, alle möglichen Bedingungen auszutesten, und eine Abhängigkeit von vielen weiteren Parametern gegeben ist. Außerdem wird ein relativ hoher Programmieraufwand benötigt.

Der Erfindung liegt als technisches Problem die Bereitstellung eines Verfahrens der eingangs genannten Art zugrunde, mit welchem auf vergleichsweise einfache Weise eine komfortable Temperierung gewährleistet wird, bei der Luftgeschwindigkeitsänderungen aufgrund automatischer Änderungen des effektiven Ausströmquerschnitts entgegengewirkt wird.

Die Erfindung löst dieses Problem durch die Bereitstellung eines Verfahrens mit den Merkmalen des Anspruchs 1. Bei diesem Verfahren wird jedes zur Regulierung des Ausströmquerschnitts dienende Stellglied selbsttätig in eine Stellung gesteuert, die abhängig von der Temperatur des ausgeblasenen Temperierfluids gewählt ist, wozu zweckmäßigerweise eine entsprechende Kennlinie vorgegeben wird. Aus den Kennlinien der von der Temperierfluid-Ausblastemperatur abhängigen Stellungen der beteiligten Stellglieder und des sich daraus ergebenden Gesamtausströmquerschnitts wird in Abhängigkeit von der Temperatur des ausgeblasenen Temperierfluids eine Kennlinie ermittelt, gemäß welcher die Förderleistung des Fördergebläses reguliert wird. Dabei wird die Förderleistung so eingestellt, daß die Ausströmgeschwindigkeit des Temperierfluids unabhängig von der jeweiligen Ausströmtemperatur im wesentlichen konstant bleibt. Mit dieser Vorgehensweise wird mit relativ wenig Programmieraufwand und wenig Speicherbedarf in der Regelungselektronik sowie nur geringem Applikationsaufwand ein hoher Temperierkomfort beim Betrieb einer Heizungs- und/oder Klimaanlage, z.B. in einem Fahrzeug, erzielt. Die zur Änderung der Temperierleistung selbsttätig erfolgende Verstellung des Gesamtausströmquerschnitts wird von einer passenden Änderung der Förderleistung des Fördergebläses begleitet, die so gewählt ist, daß merkliche Schwankungen in der Temperierfluid-Ausströmgeschwindigkeit vermieden werden. Konstruktive Änderungen an der Anlage, z.B. an einem Ausströmkanal und/oder einem zugehörigen ausströmquerschnittsregulierenden Stellglied, können verhältnismäßig einfach und schnell durch geeignete Anpassung der Kennlinien berücksichtigt werden. Ebenso einfach ist die Anpassung des Anlagenbetriebs an eine Verschiebung einer Kennlinie für ein ausströmquerschnittsregulierendes Stellglied möglich, z.B. wenn bei Einsatz im Fahrzeug eine Fußraumklappe erst bei einer höheren Temperatur als bisher öffnen soll.

Ein nach Anspruch 2 weitergebildetes Verfahren ist speziell auf die Gegebenheiten von Heizungs- und/oder Klimaanlagen angepaßt, die in Kraftfahrzeugen eingebaut sind und ein Ansauggebläse als Fördergebläse sowie diverse Klappen als ausströmquerschnittsregulierende Stellglieder beinhalten.

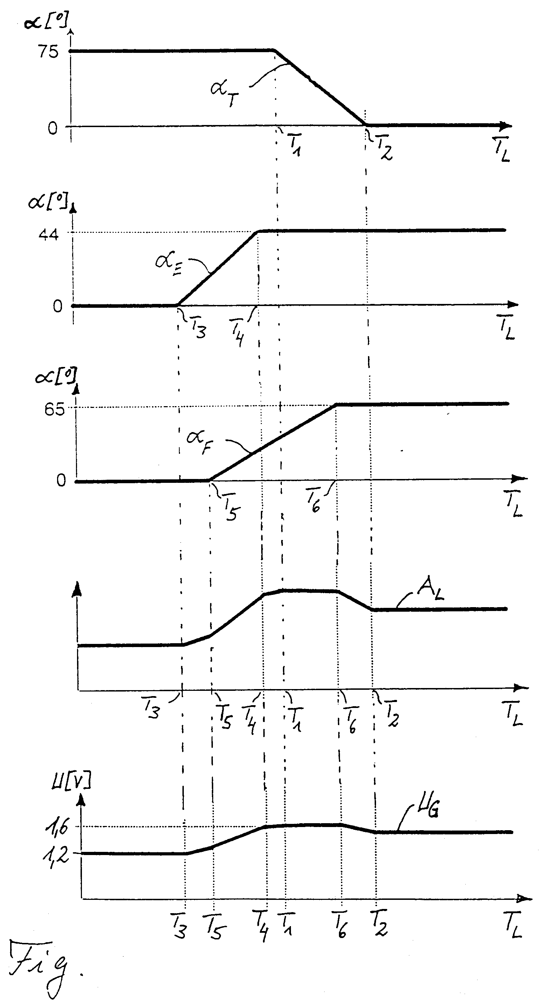

Eine bevorzugte Ausführungsform der Erfindung ist in der Zeichnung dargestellt und wird nachfolgend beschrieben.

Die einzige Figur zeigt in Diagrammform Kennlinien verschiedener Klappen einer Klimaanlage eines Kraftfahrzeuges sowie eine Kennlinie von deren Gesamtausströmquerschnitt und der Grundlastspannung eines Ansauggebläses, jeweils in Abhängigkeit von der Luftausströmtemperatur.

Das in Verbindung mit den in der Figur dargestellten Diagrammen nachfolgend beschriebene Verfahren dient zum Betrieb einer Klimaanlage eines Kraftfahrzeuges, die drei Luftausströmkanäle, und zwar einen Temperierkanal, einen Entfrosterkanal und einen Fußraumkanal, umfaßt, in denen jeweils eine schwenkbewegliche Klappe zur Regulierung des Ausströmquerschnitts angeordnet ist. Es versteht sich, daß je nach Systemauslegung jeder Luftausströmkanal mehrteilig aus mehreren Teilkanälen bestehen kann, die zu verschiedenen Bereichen des Fahrzeuginnenraums führen und jeweils eine eigene Klappe beinhalten. In diesem Sinne wird nachfolgend unter der Bezeichnung Temperierklappe die Gesamtheit aller auf den gesamten effektiven Ausströmquerschnitt des ggf. mehrkanaligen Temperierkanals einwirkenden Stellglieder verstanden, analoges gilt für die Bezeichnungen Entfrosterklappe und Fußraumklappe.

Verfahrensgemäß werden für die Temperierklappe, die Entfrosterklappe und die Fußraumklappe Kennlinien des Klappenwinkels (α) der schwenkbeweglichen Klappen in Abhängigkeit von der Temperatur der aus der Klimaanlage ausströmenden, in den Fahrzeuginnenraum eingeblasenen, als Temperierfluid dienenden Luft vorgegeben, wie sie in den obersten drei Diagrammen der Figur dargestellt sind. So nimmt der Klappenwinkel (α_{T}) für die Temperierklappe, wie im obersten Diagramm gezeigt, bei höher werdender Luftausströmtemperatur ab einem vorgegebenen ersten Temperaturwert (T₁) linear ab, bis er bei einem zweiten Temperaturwert (T₂) den Wert null erreicht. Umgekehrt steigt der Klappenwinkel (α_{E}) der Entfrosterklappe, wie im zweitobersten Diagramm gezeigt, mit steigender Luftausströmtemperatur (T_{L}) ab einem dritten Temperaturwert (T₃) linear bis auf einen Maximalwert von 44° an, den er bei einem vierten Temperaturwert (T₄) erreicht, der kleiner als der erste Temperaturwert (T₁) ist. Analog steigt der Klappenwinkel (α_{F}) der Fußraumklappe bei zunehmender Luftausströmtemperatur (T_{L}) ab einem zwischen dem dritten (T₃) und dem vierten (T₄) liegenden fünften Temperaturwert (T₅) linear von null bis auf einen Maximalwert von 65° an, der bei einem zwischen dem ersten (T₁) und dem zweiten (T₂) liegenden sechsten Temperaturwert (T₆) erreicht wird.

Jedem Klappenwinkel (α_{T}, α_{E}, α_{F}) und damit jeder Stellung der schwenkbeweglichen Klappen entspricht ein bestimmter effektiver Ausströmquerschnitt des zugehörigen Luftausströmkanals. Die Steuer- oder Regeleinheit der Anlage ermittelt nun aus den luftausströmtemperaturabhängig vorgegebenen Klappenwinkel-Kennlinien (α_{T}, α_{E}, α_{F}) für jeden Luftausströmtemperaturwert den sich ergebenden gesamten Ausströmquerschnitt (A_{L}) aller Luftausströmkanäle der Anlage. Die sich daraus ergebende Kennlinie des Gesamtausströmquerschnitts (A_{L}) in Abhängigkeit von der Luftausströmtemperatur (T_{L}) ist in ihrem qualitativen Verlauf im zweituntersten Diagramm der Figur wiedergegeben. Daraus ist erkennbar, daß der Gesamtausströmquerschnitt (A_{L}) mit steigender Luftausströmtemperatur (T_{L}) von einem Wert, der durch die bei kleiner Luftausströmtemperatur offene Temperierklappe bestimmt ist, ab dem dritten Temperaturwert (T₃) bis zum sechsten Temperaturwert (T₆) stückweise linear ansteigt, und zwar zwischen dem fünften (T₅) und dem vierten Temperaturwert (T₄) mit größerer Steigung als zwischen dem dritten (T₃) und dem fünften (T₅) bzw. zwischen dem vierten (T₄) und dem ersten Temperaturwert (T₁). Zwischen dem ersten (T₁) und dem sechsten Temperaturwert (T₆) ergibt sich nur noch ein sehr geringfügiger Anstieg, da in diesem Bereich das zunehmende Öffnen der Fußraumklappe vom einsetzenden Schließen der Temperierklappe annäherend kompensiert wird. Da sich bei weiter steigender Luftausströmtemperatur (T_{L}) das Schließen der Temperierklappe über das Erreichen des maximalen Öffnungswinkels durch die Fußraumklappe hinaus fortsetzt, fällt der Gesamtausströmquerschnitt (A_{L}) bis zum zweiten Temperaturwert (T₂) wieder etwas ab.

Unter Zugrundelegung der solchermaßen ermittelten Kennlinie für den Gesamtausströmquerschnitt (A_{L}) in Abhängigkeit von der Luftausströmtemperatur (T_{L}) wird verfahrensgemäß die Grundlastspannung (U_{G}) eines Fördergebläses der Klimaanlage in Form eines Ansauggebläses geeignet selbsttätig so reguliert, daß die Luftausströmgeschwindigkeit unabhängig vom jeweils vorliegenden Gesamtausströmquerschnitt (A_{L}) in etwa konstant bleibt. Zu diesem Zweck wird zur Einstellung dieser Gebläsespannung (U_{G}) für den Grundlastbetrieb des Gebläses eine im untersten Diagramm der Figur gezeigte Kennlinie herangezogen, deren Verlauf proportional demjenigen der Gesamtausströmquerschnitt-Kennlinie (A_{L}) folgt, wobei die Gebläsegrundlastspannung (U_{G}) zwischen 1,2V und 1,6V variiert. Eine Änderung im Gesamtausströmquerschnitt (A_{L}) aufgrund einer selbsttätigen Klappenverstellung hat somit eine proportionale Änderung der Grundlast-Förderleistung des Ansauggebläses derart zur Folge, daß die von der Klimaanlage temperierte und in den Fahrzeuginnenraum geleitete Luft im Grundlastbetrieb der Anlage, d.h. wenn keine sonstigen Gebläseleistungsänderungen infolge einer Innentemperatur-Regelabweichung oder dgl. vorliegen, mit im wesentlichen konstanter Geschwindigkeit aus den Luftausströmkanälen über zugehörige Düsen ausströmt.

Es versteht sich, daß sich je nach Anlage unterschiedliche Gebläsespannungskennlinien zum verfahrensgemäßen Betrieb einer Heizungs- und/oder Klimaanlage ergeben können, um im jeweiligen Fall sicherzustellen, daß selbsttätige Änderungen im effektiven Ausströmquerschnitt der Anlage, die sich beispielsweise durch Klappenverstellungen ergeben, nicht zu einer merklich anderen Luftausströmgeschwindigkeit an den jeweiligen Ausströmdüsen führen. Die zur Einstellung der Grundlast-Förderleistung des Gebläses dienende Kennlinie (U_{G}) in Abhängigkeit von der Luftausströmtemperatur (T_{L}) kann alternativ zur oben beschriebenen Bestimmung über die Kennlinie des Gesamtausströmquerschnitts (A_{L}) auch mittels einer Meßreihe ermittelt werden, bei welcher für einen jeweiligen Luftausströmtemperaturwert bzw. einer jeweiligen Gesamtheit von eingestellten Klappenwinkeln die Gebläsespannung so lange verändert wird, bis sich ein gleichbleibender Wert für die Luftausströmgeschwindigkeit einstellt. Es versteht sich, daß die verfahrensgemäße Maßnahme der Konstanthaltung der Luftausströmgeschwindigkeit auf Wunsch auch auf einen Teil aller Luftausströmkanäle bzw. Klappen der Heizungs- und/oder Klimaanlage beschränkt werden kann, beispielsweise bei Einsatz in Kraftfahrzeugen auf die für das Zugempfinden der Fahrzeuginsassen besonders relevanten Ausströmkanäle, wie die den seitlichen Belüftungsdüsen zugeordneten Ausströmkanäle.

## Patentansprüche

1. Verfahren zum Betrieb einer Heizungs- und/oder Klimaanlage, insbesondere für ein Kraftfahrzeug, bei dem
- ein Temperierfluid mittels eines in seiner Förderleistung regulierbaren Fördergebläses angesaugt und nach Temperierung über wenigstens einen Ausströmkanal ausgeblasen wird, dessen Ausströmquerschnitt mittels eines zugehörigen, ansteuerbaren Stellglieds regulierbar ist,
**dadurch gekennzeichnet, daß**
- jedes Stellglied zur Regulierung des Ausströmquerschnitts selbsttätig in eine von der Temperatur (T_{L}) des ausströmenden Temperierfluids abhängige Stellung (α_{T}, α_{E}, α_{F}) gesteuert wird und
- die Förderleistung des Fördergebläses gemäß einer Kennlinie (U_{G}) in Abhängigkeit von der Temperierfluid-Ausströmtemperatur (T_{L}) eingestellt wird, wobei diese Kennlinie (U_{G}) abhängig von den Stellungen (α_{T}, α_{E}, α_{F}) der beteiligten Stellglieder und des dadurch bestimmten Gesamtausströmquerschnitts (A_{L}) derart ermittelt wird, daß die Temperierfluid-Ausströmgeschwindigkeit im wesentlichen konstant bleibt.

2. Verfahren nach Anspruch 1 zum Betrieb einer Heizungs- und/oder Klimaanlage für ein Kraftfahrzeug, weiter
**dadurch gekennzeichnet, daß**
die ermittelte Förderleistungskennlinie (U_{G}) für den Grundlastbetrieb des Fördergebläses herangezogen wird und die ausströmquerschnittsregulierenden Stellglieder wenigstens eine Temperierklappe, eine Entfrosterklappe und eine Fußraumklappe umfassen.
